# EUROPÄISCHE PATENTSCHRIFT

(11) **EP 3 124 889 B1**
(45) Veröffentlichungstag und Bekanntmachung des Hinweises auf die Patenterteilung: **26.08.2020**
(21) Anmeldenummer: 15179380.9
(22) Anmeldetag: 31.07.2015
(51) Int. Cl.: F24H 3/04, B60H 1/22, H05B 3/02, F24H 9/18, H05B 3/50

(54) **ELEKTRISCHE HEIZVORRICHTUNG UND HEIZUNGS- ODER KLIMAANLAGE MIT EINER SOLCHEN ELEKTRISCHEN HEIZVORRICHTUNG**
ELECTRIC HEATING DEVICE AND HEATING OR AIR CONDITIONING FACILITY WITH SUCH AN ELECTRICAL HEATING DEVICE
DISPOSITIF DE CHAUFFAGE ÉLECTRIQUE ET INSTALLATION DE CHAUFFAGE OU CLIMATISEUR DOTÉ(E) D'UN TEL DISPOSITIF DE CHAUFFAGE ÉLECTRIQUE

(43) Veröffentlichungstag der Anmeldung: 01.02.2017
(73) Patentinhaber: MAHLE International GmbH, 70376 Stuttgart (DE)
(72) Erfinder: Cmelik, Alain, 68760 Willer-sur-Thur (FR)
(74) Vertreter: Grauel, Andreas

(56) Entgegenhaltungen:
- EP-A1- 0 616 486
- EP-A1- 1 457 743
- EP-A1- 1 580 495
- DE-A1-102009 032 621
- US-A- 5 854 471

## Beschreibung

### Technisches Gebiet

Die Erfindung betrifft eine elektrische Heizvorrichtung gemäß dem Oberbegriff von Anspruch 1. Darüber hinaus betrifft die Erfindung eine Heizungs- oder Klimaanlage mit einer solchen elektrischen Heizvorrichtung.

### Stand der Technik

Für die Beheizung eines Kraftfahrzeuginnenraums wird üblicherweise die vom Motor des Kraftfahrzeugs produzierte Abwärme verwendet. Diese Abwärme fällt im Betrieb des Motors an. Allerdings kann die Abwärme in einem für die angestrebte Heizleistung genügendem Maß erst im Anschluss an eine Warmlaufphase bereitgestellt werden. Vor allem moderne Motoren mit sparsamem Kraftstoffverbrauch erzeugen darüber hinaus oft nur wenig Abwärme. Dies gilt auch für Elektromotoren. Daher hat es sich bewährt, bei entsprechenden Witterungsbedingungen elektrische Heizvorrichtungen bzw. elektrische Zusatzheizvorrichtungen zuzuschalten. Eine wichtige Aufgabe im Zusammenhang mit elektrischen Heizvorrichtungen ist, ihre elektronischen Bauteile vor einer Überhitzung bzw. einer frühzeitigen Abnutzung durch an elektrischen Widerständen erzeugte Abwärme zu schützen. Darüber hinaus ist es sinnvoll, möglichst kleine und kompakte elektrische Heizvorrichtungen zu fertigen, die im Kraftfahrzeug weniger Bauraum beanspruchen.

Die DE 10 2009 032 621 A1 offenbart hierzu eine PWM-gesteuerte PTC-Heizung hoher Kapazität, die einen positiven Netzanschluss zur Stromversorgung von PTC-Vorrichtungen zur Wärmeerzeugung aufweist, welcher über ein erhöhtes Elektrizitätsdurchlassvolumen verfügt. Hierfür weist der positive Netzanschluss eine flache Plattenform auf, um den elektrischen Widerstand zu verringern und die durch den elektrischen Widerstand erzeugte Abwärme zu reduzieren. Darüber hinaus ist der positive Netzanschluss an einer Teilmontagefläche einer zur Steuereinheit der Heizung gehörenden Leiterplatte derart montiert, dass er aus der Teilmontagefläche vorsteht. Darüber hinaus weist die Leiterplatte eine Anzahl an Wärmeabgabelöchern auf, durch welche Luft durchtritt. Die Luft nimmt dabei Wärme auf und kühlt die Leiterplatte.

Die EP 0 616 486 A1 und die US 5 854 471 offenbaren eine elektrische Heizeinrichtung mit zumindest einem Gehäuseelement und mit einer Anzahl von blockartig zu einem PTC-Register zusammengesetzt angeordneten PTC-Elementen mit Kontaktblechen und Wärmeleitrippen, wobei jeweils ein PTC-Element zwischen zwei Kontaktblechen angeordnet ist, wobei zumindest eines der Kontaktbleche an zumindest einem Kontaktblechende einen Fortsatz ausbildet und das zumindest eine Gehäuseelement eine Ausnehmung ausbildet, wobei der Fortsatz in die zumindest eine Ausnehmung eingreift und/oder die zumindest eine Ausnehmung durchgreift. Die EP 1 457 743 A1 offenbart eine elektrische Heizeinrichtung mit Kontaktblechen mit einem Fortsatz an einem Kontaktblechende.

### Darstellung der Erfindung, Aufgabe, Lösung, Vorteile

Es ist die Aufgabe der Erfindung, eine weiter verbesserte elektrische Heizvorrichtung bereitzustellen, die bauraumsparend ausgebildet ist und dennoch eine ausreichende Leistung aufweist.

Darüber hinaus ist es die Aufgabe der Erfindung, eine Heizungs- oder Klimaanlage zu schaffen, in welcher eine solche elektrische Heizvorrichtung einsetzbar ist.

Die Aufgabe zur elektrischen Heizvorrichtung wird mit den Merkmalen von Anspruch 1 gelöst.

Ein Ausführungsbeispiel der Erfindung betrifft eine elektrische Heizvorrichtung für eine Heizungs- oder Klimaanlage, insbesondere für ein Kraftfahrzeug, mit zumindest einem Gehäuseelement und mit einer Anzahl von blockartig zu einem PTC-Register angeordneten PTC-Elementen mit Kontaktblechen und Wärmeleitrippen, wobei jeweils ein PTC-Element zwischen zwei Kontaktblechen angeordnet ist, wobei zumindest eins der Kontaktbleche an zumindest einem Kontaktblechende einen Fortsatz ausbildet und das zumindest eine Gehäuseelement eine Ausnehmung ausbildet, wobei der Fortsatz in die zumindest eine Ausnehmung eingreift und/oder die zumindest eine Ausnehmung durchgreift, derart, dass das zumindest eine Kontaktblech und das zumindest eine Gehäuseelement miteinander verbunden sind. Dabei bedeutet der Begriff des Verbundenseins, dass zumindest eine thermische Verbindung und gegebenenfalls zusätzlich auch eine elektrische Verbindung vorliegt. Hierdurch wird eine stabile und einfach zu erzeugende Verbindung zwischen den Kontaktblechen und einem Gehäuseelement oder auch einem Rahmenteil ermöglicht.

Eine erfindungsgemäße Ausführungsform der elektrischen Heizvorrichtung sieht vor, dass der Fortsatz in Längsrichtung zur Ausnehmung hin verlaufend einen im Wesentlichen stufenförmig abnehmenden Querschnitt aufweist. Dies erlaubt eine besonders materialsparende und dennoch sichere Verbindung der Kontaktbleche mit einem Gehäuseelement. Darüber hinaus bildet die stufenförmige Struktur des Fortsatzes eine Auflagefläche, welche gegen die Umgebung der Ausnehmung abstützbar ist. Dies erhöht die Stabilität zusätzlich.

Bei einem besonders vorteilhaften Ausführungsbeispiel der elektrischen Heizvorrichtung weist der Fortsatz an seinem vom PTC-Register wegweisenden Ende einen Querschnitt auf, welcher etwa der Hälfte, einem Drittel, einem Viertel oder einem Fünftel des Querschnitts des Kontaktblechendes entspricht, welches den Fortsatz ausbildet. Die Verbindung zwischen dem Fortsatz und der Ausnehmung fällt dabei besonders raumsparend aus.

Eine zusätzliche Ausführungsform der elektrischen Heizvorrichtung sieht vor, dass zumindest ein Kontaktblech jeweils an einem ersten Kontaktblechende einen ersten Fortsatz ausbildet und an einem zweiten Kontaktblechende einen zweiten Fortsatz ausbildet, wobei der erste Fortsatz in eine an einem ersten Gehäuseelement ausgebildete erste Ausnehmung eingreift und/oder die erste Ausnehmung durchgreift und der zweite Fortsatz in eine an einem zweiten Gehäuseelement ausgebildete zweite Ausnehmung eingreift und/oder die zweite Ausnehmung durchgreift. Die Kontaktbleche lassen sich so an beiden Enden jeweils bauraumsparend mit einem Gehäuseelement oder einem Rahmenteil verbinden.

Bei einer weiteren Ausführungsform der elektrischen Heizvorrichtung weist das zweite Gehäuseelement zumindest einen Stecker für einen Stromanschluss und/oder eine Steuereinheit auf. Dies erlaubt die direkte Stromversorgung des PTC-Registers über einen Stromanschluss oder die Verbindung des PTC-Registers mit einer Schalteranordnung zur separaten Steuerung der PTC-Elemente.

Ein zusätzliches Ausführungsbeispiel der elektrischen Heizvorrichtung sieht vor, dass zumindest eines der Kontaktbleche zumindest an einem seiner beiden Kontaktblechenden einen Fortsatz ausbildet. Dies erweitert die Konstruktionsmöglichkeiten.

Ein erfindungsgemäßes Ausführungsbeispiel der elektrischen Heizvorrichtung sieht weiterhin vor, dass das zumindest eine Gehäuseelement in einem die zumindest eine Ausnehmung umgebenden Bereich, eine im Wesentlichen U-förmige Vertiefung aufweist, wobei der zumindest eine Fortsatz die Vertiefung durchragt.

Bei einer vorteilhaften Ausführungsform der elektrischen Heizvorrichtung weist die Vertiefung eine Vertiefungsinnenwand auf und das zumindest eine Kontaktblech weist zumindest eine zu einer der Wärmeleitrippen weisende Längsseite auf, wobei die Längsseite gegen die Vertiefungsinnenwand abstützbar ist.

Bei einer besonders vorteilhaften Ausführungsform der elektrischen Heizvorrichtung weist das zumindest eine Kontaktblech zwei parallel zu einer vom PTC-Register gebildeten Ebene angeordnete Hochkanten auf, welche insbesondere im Bereich des zumindest einen Gehäuseelements frei liegen. Da die Umklammerung der Hochkanten durch den Rahmen wegfällt, kann die elektrische Heizvorrichtung bei gleicher Leistung kleiner ausgebildet werden. Alternativ können die Kontaktbleche in vorteilhafter Weise breiter ausgebildet werden, ohne, dass die elektrische Heizvorrichtung mehr Bauraum beansprucht. Hierdurch verbessert sich die Wärmeübertragung auf einen durch das PTC-Register zu erwärmenden Luftstrom.

Die Aufgabe zur Heizungs- oder Klimaanlage wird mit den Merkmalen des Anspruchs 8 gelöst.

Eine Ausführungsform der Heizungs- oder Klimaanlage sieht vor, dass in der Heizungs- oder Klimaanlage zumindest eine gemäß der oben genannten Beschreibung gestaltete elektrische Heizvorrichtung anordenbar ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Figuren der Zeichnung näher erläutert. Es zeigen:
- Fig. 1: eine schematisch Darstellung einer erfindungsgemäßen elektrischen Heizvorrichtung,
- Fig. 2: eine schematische seitliche Ansicht eines Ausschnitts einer elektrischen Heizvorrichtung gemäß Figur 1,
- Fig. 3: eine perspektivische Detailansicht eines Ausschnitts einer elektrischen Heizvorrichtung gemäß Figur 1, und
- Fig. 4: eine schematische seitliche Ansicht eines Ausschnitts einer elektrischen Heizvorrichtung gemäß Figur 1.

### Bevorzugte Ausführung der Erfindung

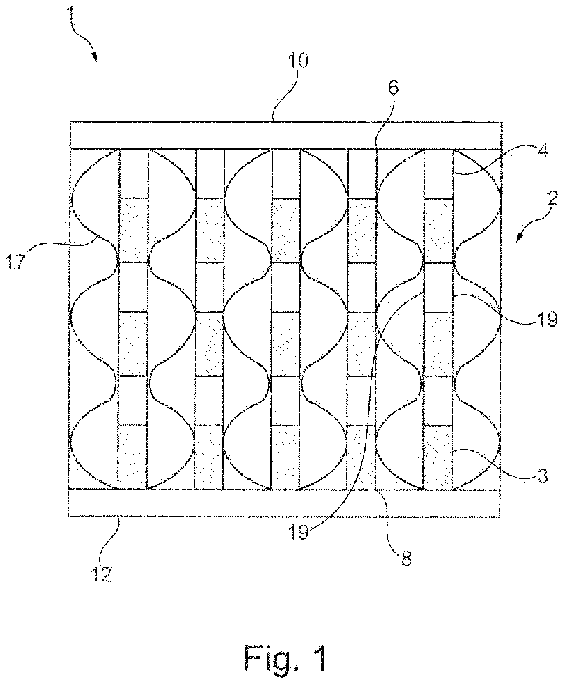

Die Figur 1 zeigt eine schematische Ansicht eines ersten Ausführungsbeispiels einer elektrischen Heizvorrichtung 1. Die elektrische Heizvorrichtung 1 kann in einer nicht dargestellten Heizungs- und/oder Klimaanlage eines Kraftfahrzeugs angeordnet sein.

Die elektrische Heizvorrichtung 1 weist eine Anzahl von PTC-Elementen 3, so genannte Positive-Temperature-Coefficient-Elemente, und jeweils benachbart zu den PTC-Elementen 3 angeordnete Kontaktbleche 4 und Wärmeleitrippen 17 auf. In alternativen Ausführungsformen kann die elektrische Heizvorrichtung 1 anstatt der PTC-Elemente 3 auch andere Formen von Widerstandsheizelementen aufweisen. Ein PTC-Element 3 ist jeweils zwischen zwei parallel zueinander angeordneten Kontaktblechen 4 angeordnet, von denen jeweils eins als elektrischer Pluspol und eins als elektrischer Minuspol dient oder mit einem solchen direkt oder indirekt verbunden ist bzw. eins elektrisch mit Masse verbunden ist. Die Kontaktbleche 4 und die PTC-Elemente 3 sind beispielsweise durch Kleben mit einem elektrisch isolierenden jedoch wärmeleitfähigen Kleber oder durch Löten oder durch mechanische Verspannung miteinander verbunden.

Jedes der Kontaktbleche 4 weist jeweils zwei einander gegenüberliegende Längsseiten 19 auf. Die dem PTC-Element 3 gegenüberliegenden Längsseiten 19 der Kontaktbleche 4 sind beispielhaft durch Kleben oder Löten oder durch mechanische Verspannung mit einer Wärmeleitrippe 17 verbunden.

Die oben beschriebene Anordnung von PTC-Elementen 3, Kontaktblechen 4 und Wärmeleitrippen 17 ergibt ein blockartiges PTC-Register 2, welches beispielhaft in einem nicht dargestellten Luftkanal einer Heizungs- oder Klimaanlage eines Kraftfahrzeugs angeordnet ist. Die Luftströmungsrichtung der im Luftkanal strömenden Luft liegt bei der Figur 1 in Blickrichtung oder entgegen der Blickrichtung.

Zwischen jeweils zwei mit einem PTC-Element 3 verbundenen Kontaktblechen 4 liegt eine Spannung von beispielhaft 12 Volt an, die jedoch in verschiedenen Ausführungsbeispielen auch größer sein kann.

Um das PTC-Register 2 herum können beispielhaft ein nicht dargestellter Rahmen und/oder zumindest ein Gehäuseelement 10, 12 angeordnet sein.

Die Kontaktbleche 4 weisen ein erstes Kontaktblechende 6 und ein zweites Kontaktblechende 8 auf. Im Bereich des ersten Kontaktblechendes 6 ist in dem in Figur 1 dargestellten Ausführungsbeispiel ein erstes Gehäuseelement 10 angeordnet.

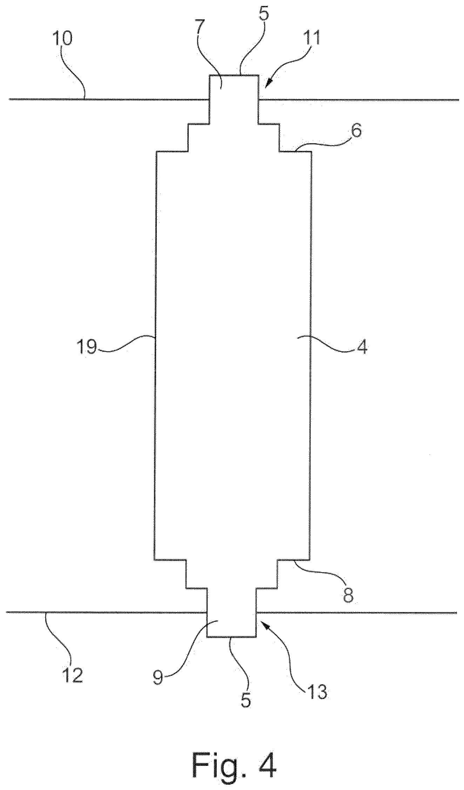

In der Figur 4 sind das erste und das zweite Kontaktblechende schematisch dargestellt. Im Bereich des zweiten Kontaktblechendes 8 ist in dem in Figur 4 dargestellten Ausführungsbeispiel ein zweites Gehäuseelement 12 angeordnet. Das zweite Gehäuseelement 12 weist beispielsweise einen nicht dargestellten Stromanschluss auf, der das PTC-Register 2 mit Strom versorgt. Dabei liegt zwischen jeweils zwei mit einem PTC-Element 3 verbundenen Kontaktblechen 4 im Betrieb eine Spannung von beispielhaft 12 Volt an. In verschiedenen Ausführungsbeispielen kann die anliegende Spannung auch größer sein. Darüber hinaus kann das zweite Gehäuseelement 12 mit einer nicht dargestellten Steuereinheit verbunden sein, die den Stromanschluss aufweist und mit welcher die einzelnen PTC-Elemente 3 beispielsweise einzeln ansteuerbar bzw. beheizbar sind.

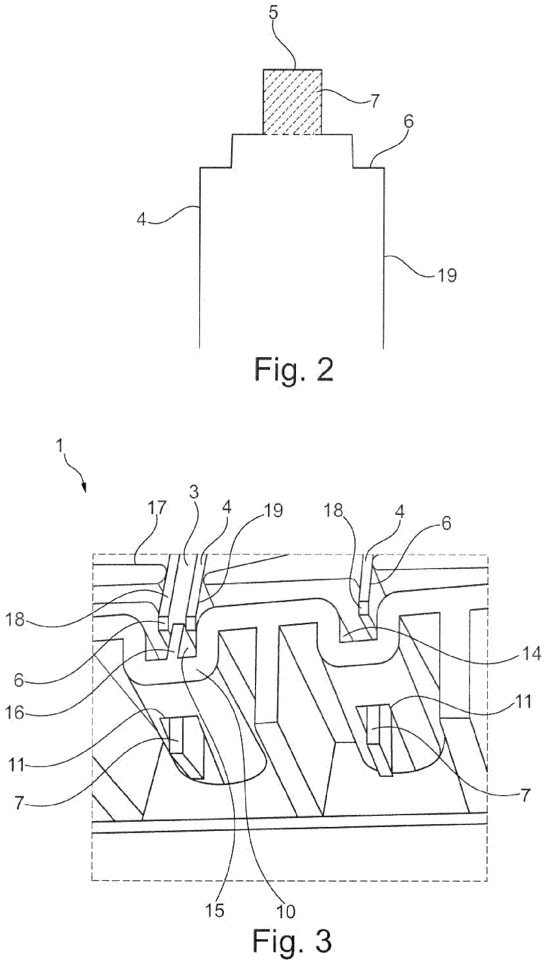

In Figur 2 ist eine Detailansicht des ersten Kontaktblechendes 6 dargestellt. Das erste Kontaktblechende 6 weist einen stufenförmigen ersten Fortsatz 7 auf. Der erste Fortsatz 7 und das Kontaktblech 4 sind beispielhaft einteilig durch Stanzen oder Schneiden eines stufenförmigen Profils im Bereich des ersten Kontaktblechendes 6 ausgebildet. Der Begriff des stufenförmigen ersten Fortsatzes 7 bedeutet bei diesem Ausführungsbeispiel, dass das erste Kontaktblechende 6 in Längsrichtung zum ersten Ende 5 des ersten Fortsatzes 7 bzw. dem ersten Gehäuseelement 10 hin verlaufend einen stufenförmig abnehmenden Querschnitt aufweist. Das zum ersten Gehäuseelement 10, welches in Figur 2 nicht dargestellt ist, weisende Ende 5 des Fortsatzes 7 weist beispielhaft ein Querschnittsprofil auf, dessen Größe etwa der Hälfte, einem Drittel, einem Viertel oder einem Fünftel der Größe des Querschnitts des ersten Kontaktblechendes 6 entspricht. Dabei verringert sich der Querschnitt im Bereich des ersten Kontaktblechendes 6 in Längsrichtung zum Ende 5 des Fortsatzes 7 hin verlaufend von einem zwischen den beiden Längsseiten 19 des Kontaktbleches 4 angeordneten Querschnittssegment über beispielhaft zwei Stufen bis zum Querschnitt des Endes 5 des ersten Fortsatzes 7.

In Figur 4 ist dargestellt, dass der zweite Fortsatz 9 im Bereich des zweiten Kontaktblechendes 8 entsprechend dem ersten Fortsatz 7 ausgebildet ist.

Figur 3 zeigt eine Detailansicht des ersten Gehäuseelements 10 und einer Anzahl von beispielhaft mit dem ersten Gehäuseelement 10 verbundenen Kontaktblechen 4, zwischen denen zum Teil PTC-Elemente 3 angeordnet sind.

Das erste Gehäuseelement 10 weist an einer den Wärmeleitrippen 17 und den Kontaktblechen 4 zugewandten Innenseite eine Reihe von Vertiefungen 15 auf, die im Wesentlichen U-förmig ausgebildet sind. Die Vertiefungen 15 weisen an ihrem Vertiefungsboden eine erste Ausnehmung 11 auf. Der erste Fortsatz 7 durchragt mit seinem Ende 5 die Vertiefung 15 und die erste Ausnehmung 11.

In Figur 4 ist dargestellt, dass der zweite Fortsatz 9 entsprechend eine am zweiten Gehäuseelement 12 ausgebildete zweite Ausnehmung 13 durchragt. Das zweite Gehäuseelement 12 weist an einer den Wärmeleitrippen 17 und den Kontaktblechen 4 zugewandten Innenseite ebenfalls eine Reihe von Vertiefungen 15 auf, die im Wesentlichen U-förmig ausgebildet sind. Die Vertiefungen 15 weisen an ihrem Vertiefungsboden eine Ausnehmung 13 auf. Der zweite Fortsatz 9 durchragt mit seinem Ende 5 die Vertiefung 15 und die zweite Ausnehmung 13.

Die Anzahl der Vertiefungen 15 und der Ausnehmungen 11, 13 kann in unterschiedlichen Ausführungsbeispielen variieren.

Die Kontaktbleche 4 weisen jeweils zwei einander gegenüberliegende Hochkanten 18 auf, die vertikal zu der Luftströmungsrichtung des die Wärmeleitrippen 17 durchströmenden Luftstroms angeordnet sind. Die Kontaktbleche 4 sind mit ihren Längsseiten 19 im Bereich der ersten Kontaktblechenden an einer Vertiefungsinnenwand 14 der Vertiefung 15 abgestützt. In alternativen Ausführungsformen sind die ersten Kontaktblechenden 6 anderweitig oder nicht am ersten Gehäuseelement 10 abgestützt. Beispielhaft sind die Kontaktbleche 4 mit ihren Längsseiten 19 im Bereich der ersten Kontaktblechenden 6 an einem im Bereich der Vertiefung 15 angeordneten Stift 16 abgestützt.

Die Kontaktbleche 4 können darüber hinaus auch mit ihren Längsseiten 19 im Bereich der zweiten Kontaktblechenden 8 an einer vom zweiten Gehäuseelement 12 ausgebildeten Vertiefungsinnenwand 14 der Vertiefung 15 abgestützt sein. In alternativen Ausführungsformen sind die zweiten Kontaktblechenden 8 anderweitig oder nicht am zweiten Gehäuseelement 12 abgestützt. Beispielhaft sind die Kontaktbleche 4 mit ihren Längsseiten 19 im Bereich der zweiten Kontaktblechenden 8 an einem im Bereich der Vertiefung 15 angeordneten Stift 16 abgestützt.

Die in Luftströmungsrichtung und/oder entgegen der Luftströmungsrichtung weisenden Längsseiten 19 der Kontaktbleche 4 liegen im Bereich der ersten Kontaktblechenden 6 frei. Das erste Gehäuseelement 10 weist hierbei im Bereich der im Wesentlichen U-förmigen Vertiefungen 15 in einer parallel zu den Längsseiten 19 angeordneten Ebene jeweils eine Aussparung auf. Darüber hinaus können die Längsseiten 19 der Kontaktbleche 4 auch im Bereich der zweiten Kontaktblechenden 8 frei liegen. Das zweite Gehäuseelement 12 weist hierbei im Bereich der im Wesentlichen U-förmigen Vertiefungen 15 in einer parallel zu den Längsseiten 19 angeordneten Ebene jeweils eine Aussparung auf.

## Patentansprüche

1. Elektrische Heizvorrichtung (1), insbesondere für eine Heizungs- oder Klimaanlage, insbesondere für ein Kraftfahrzeug, mit zumindest einem Gehäuseelement (10, 12) und mit einer Anzahl von blockartig zu einem PTC-Register (2) zusammengesetzt angeordneten PTC-Elementen (3) mit Kontaktblechen (4) und Wärmeleitrippen (17), wobei jeweils ein PTC-Element (3) zwischen zwei Kontaktblechen (4) angeordnet ist, wobei zumindest eines der Kontaktbleche (4) an zumindest einem Kontaktblechende (6, 8) einen Fortsatz (7, 9) ausbildet und das zumindest eine Gehäuseelement (10, 12) eine Ausnehmung (11, 13) ausbildet, wobei der Fortsatz (7, 9) in die zumindest eine Ausnehmung (11, 13) eingreift und/oder die zumindest eine Ausnehmung (11, 13) durchgreift, derart, dass das zumindest eine Kontaktblech (4) und das zumindest eine Gehäuseelement (10, 12) formschlüssig miteinander verbunden sind, **dadurch gekennzeichnet, dass** das zumindest eine Gehäuseelement (10, 12) in einem die zumindest eine Ausnehmung (11, 13) umgebenden Bereich eine im Wesentlichen U-förmige Vertiefung (15) aufweist, wobei der zumindest eine Fortsatz (7, 9) die Vertiefung (15) durchragt und dass der Fortsatz (7, 9) in Längsrichtung zur Ausnehmung (11, 13) hin verlaufend einen im Wesentlichen stufenförmig abnehmenden Querschnitt aufweist.

2. Elektrische Heizvorrichtung (1) nach Anspruch 1, **dadurch gekennzeichnet, dass** der Fortsatz (7, 9) an seinem vom PTC-Register (2) wegweisenden Ende (5) einen Querschnitt aufweist, welcher etwa der Hälfte oder weniger des Querschnitts des Kontaktblechendes (6, 8) entspricht, welches den Fortsatz (7, 9) ausbildet.

3. Elektrische Heizvorrichtung (1) nach Anspruch 1 oder 2, **dadurch gekennzeichnet, dass** zumindest ein Kontaktblech (4) jeweils an einem ersten Kontaktblechende (6) einen ersten Fortsatz (7) ausbildet und an einem zweiten Kontaktblechende (8) einen zweiten Fortsatz (9) ausbildet, wobei der erste Fortsatz (7) in eine an einem ersten Gehäuseelement (10) ausgebildete erste Ausnehmung (11) eingreift und/oder die erste Ausnehmung (11) durchgreift und der zweite Fortsatz (9) in eine an einem zweiten Gehäuseelement (12) ausgebildete zweite Ausnehmung (13) eingreift und/oder die zweite Ausnehmung (13) durchgreift.

4. Elektrische Heizvorrichtung (1) nach Anspruch 2, **dadurch gekennzeichnet, dass** das zweite Gehäuseelement (12) zumindest einen Stecker für einen Stromanschluss und/oder eine Steuereinheit aufweist.

5. Elektrische Heizvorrichtung (1) nach einem der vorhergehenden Ansprüche, **dadurch gekennzeichnet, dass** zumindest eines der Kontaktbleche (4) an zumindest einem seiner beiden Kontaktblechenden (6, 8) einen Fortsatz (7, 9) ausbildet.

6. Elektrische Heizvorrichtung (1) nach einem der vorhergehenden Ansprüche, **dadurch gekennzeichnet, dass** die Vertiefung (15) eine Vertiefungsinnenwand (14) aufweist und das zumindest eine Kontaktblech (4) zumindest eine zu einer der Wärmeleitrippen (17) weisende Längsseite (19) aufweist, wobei die Längsseite (19) gegen die Vertiefungsinnenwand (14) abstützbar ist.

7. Elektrische Heizvorrichtung (1) nach einem der vorhergehenden Ansprüche, **dadurch gekennzeichnet, dass** das zumindest eine Kontaktblech (4) zwei parallel zu einer vom PTC-Register (2) gebildeten Ebene angeordnete Hochkanten (18) aufweist, welche im Bereich des zumindest einen Gehäuseelements (10, 12) frei liegen.

8. Heizungs- oder Klimaanlage, **dadurch gekennzeichnet, dass** in der Heizungs- oder Klimaanlage zumindest eine elektrische Heizvorrichtung (1) nach einem der Ansprüche 1 bis 7 angeordnet ist.

## Claims

1. An electric heating device (1), in particular for a heating or air-conditioning system, in particular for a motor vehicle, with at least one housing element (10, 12) and with a number of PTC elements (3) which are arranged in a block-like manner and assembled to a PTC register (2), with contact sheets (4) and heat-conducting ribs (17), wherein one respective PTC element (3) is arranged between two contact sheets (4), wherein at least one of the contact sheets (4) forms an extension (7, 9) on at least one contact sheet end (6, 8) and the at least one housing element (10, 12) forms a recess (11, 13), wherein the extension (7, 9) engages into the at least one recess (11, 13) and/or engages through the at least one recess (11, 13), such that the at least one contact sheet (4) and the at least one housing element (10, 12) are connected to one another in a form-fitting manner, **characterised in that** the at least one housing element (10, 12) has a substantially U-shaped depression (15) in an area surrounding the at least one recess (11, 13), wherein the at least one extension (7, 9) reaches through the depression (15) and **in that** the extension (7, 9) has a cross-section running in the longitudinal direction to the recess (11, 13) which substantially decreases in steps.

2. The electric heating device (1) according to claim 1, **characterised in that** the extension (7, 9) has a cross-section on its end (5) facing away from the PTC register (2) which corresponds about half or less of the cross-section of the contact sheet end (6, 8) which forms the extension (7, 9).

3. The electric heating device (1) according to claim 1 or 2, **characterised in that** at least one contact sheet (4) forms a first extension (7) on a respective first contact sheet end (6) and forms a second extension (9) on a second contact sheet end (8), wherein the first extension (7) engages into a first recess (11) formed on a first housing element (10) and/or engages through the first recess (11) and the second extension (9) engages into a second recess (13) formed on a second housing element (12) and/or engages through the second recess (13).

4. The electric heating device (1) according to claim 2, **characterised in that** the second housing element (12) has at least one plug for a power connection and/or a control unit.

5. The electric heating device (1) according to one of the preceding claims, **characterised in that** at least one of the contact sheets (4) forms an extension (7, 9) on at least one of its two contact sheet ends (6, 8).

6. The electric heating device (1) according to one of the preceding claims, **characterised in that** the depression (15) has a depression inner wall (14) and the at least one contact sheet (4) has at least one longitudinal side (19) facing one of the heat-conducting ribs (17), wherein the longitudinal side (19) can be supported against the depression inner wall (14).

7. The electric heating device (1) according to one of the preceding claims, **characterised in that** the at least one contact sheet (4) has two vertical edges (18) arranged in parallel to a plane formed by the PTC register (2) and which are exposed in the area of the at least one housing element (10, 12).

8. A heating or air-conditioning system, **characterised in that** at least one electric heating device (1) according to one of claims 1 to 7 is arranged in the heating or air-conditioning system.

## Revendications

1. Dispositif de chauffage électrique (1), en particulier pour un système de chauffage ou de climatisation, en particulier pour un véhicule automobile, ledit dispositif de chauffage comprenant au moins un élément de boîtier (10, 12) et comprenant un certain nombre d'éléments (3) à coefficient de température positif - CTP - disposés à la façon d'un bloc et assemblés pour former un registre CTP (2), lesdits éléments comportant des tôles de contact (4) et des ailettes (17) conductrices de la chaleur, où un élément CTP (3) est disposé à chaque fois entre deux tôles de contact (4), où au moins l'une des tôles de contact (4) forme un prolongement (7, 9) au niveau au moins d'une extrémité de la tôle de contact (6, 8), et l'élément de boîtier (10, 12) au moins au nombre de un forme un évidement (11, 13), où le prolongement (7, 9) s'engage dans l'évidement (11, 13) au moins au nombre de un et / ou traverse l'évidement (11, 13) au moins au nombre de un, de manière telle que la tôle de contact (4) au moins au nombre de un et que l'élément de boîtier (10, 12) au moins au nombre de un puissent être assemblés l'un à l'autre par complémentarité de forme, **caractérisé en ce que** l'élément de boîtier (10, 12) au moins au nombre de un, dans une zone entourant l'évidement (11, 13) au moins au nombre de un, présente une partie en creux (15) pratiquement en forme de U, où le prolongement (7, 9) au moins au nombre de un traverse la partie en creux (15), et **en ce que** le prolongement (7, 9), en s'étendant dans la direction longitudinale par rapport à l'évidement (11, 13), présente une section diminuant de façon pratiquement étagée.

2. Dispositif de chauffage électrique (1) selon la revendication 1, **caractérisé en ce que** le prolongement (7, 9), au niveau de son extrémité (5) éloignée du registre CTP (2), présente une section qui correspond à peu près à la moitié ou à moins de la moitié de la section de l'extrémité (6, 8) de la tôle de contact, laquelle extrémité forme le prolongement (7, 9).

3. Dispositif de chauffage électrique (1) selon la revendication 1 ou 2, **caractérisé en ce qu'au** moins une tôle de contact (4) forme à chaque fois un premier prolongement (7) au niveau d'une première extrémité (6) de la tôle de contact et forme un second prolongement (9) au niveau d'une seconde extrémité (8) de la tôle de contact, où le premier prolongement (7) s'engage dans un premier évidement (11) formé sur un premier élément de boîtier (10) et / ou traverse le premier évidement (11), et le second prolongement (9) s'engage dans un second évidement (13) formé sur un second élément de boîtier (12) et / ou traverse le second évidement (13).

4. Dispositif de chauffage électrique (1) selon la revendication 2, **caractérisé en ce que** le second élément de boîtier (12) présente au moins un connecteur pour un branchement électrique et / ou présente une unité de commande.

5. Dispositif de chauffage électrique (1) selon l'une quelconque des revendications précédentes, **caractérisé en ce qu'au** moins l'une des tôles de contact (4) forme un prolongement (7, 9) au niveau au moins de l'une de ses deux extrémités de la tôle de contact (6, 8).

6. Dispositif de chauffage électrique (1) selon l'une quelconque des revendications précédentes, **caractérisé en ce que** la partie en creux (15) présente une paroi intérieure (14) de la partie en creux, et la tôle de contact (4) au moins au nombre de un présente au moins un grand côté (19) pointant vers l'une des ailettes (17) conductrices de la chaleur, où le grand côté (19) peut être appuyé contre la paroi intérieure (14) de la partie en creux.

7. Dispositif de chauffage électrique (1) selon l'une quelconque des revendications précédentes, **caractérisé en ce que** la tôle de contact (4) au moins au nombre de un présente deux chants (18) disposés parallèlement à un plan formé par le registre CTP (2), lesquels chants sont dégagés dans la zone de l'élément de boîtier (10, 12) au moins au nombre de un.

8. Système de chauffage ou de climatisation, **caractérisé en ce qu'au** moins un dispositif de chauffage électrique (1) selon l'une quelconque des revendications 1 à 7 est disposé dans le système de chauffage ou de climatisation.
